# FASCICULE DE BREVET EUROPEEN

(11) **EP 1 031 176 B1**
(45) Date de publication et mention de la délivrance du brevet: **14.07.2004**
(21) Numéro de dépôt: 98954503.3
(22) Date de dépôt: 03.11.1998
(51) Int. Cl.: H02G 15/068

(54) **MANCHON REPARTITEUR DE TENSION POUR UN C BLE ELECTRIQUE HAUTE TENSION**
SPANNUNGSVERTEILENDE MUFFE FÜR ELEKTRISCHES HOCHSPANNUNGSKABEL
SPLITTER BOX FOR ELECTRIC CABLE

(30) Priorité: 13.11.1997 FR 9714226
(43) Date de publication de la demande: 30.08.2000
(73) Titulaire: SAGEM S.A., 75116 Paris (FR)
(72) Inventeur: DAURELLE, Jean-Yves, F-77300 Fontainebleau (FR)
(74) Mandataire: Fruchard, Guy
(86) Numéro de dépôt international: PCT/FR1998/002345
(87) Numéro de publication internationale: WO 1999/026327

(56) Documents cités:
- DE-A- 2 606 238
- DE-A- 3 300 901
- FR-A- 2 656 962
- US-A- 3 355 541
- US-A- 3 796 821

## Description

La présente invention concerne un manchon répartiteur de tension pour une extrémité de câble, en particulier pour des câbles à très haute tension, par exemple des câbles de transport d'électricité pouvant atteindre des tensions de 500 000 volts.

Il est connu, notamment du document DE-A-2.606.238, de réaliser un manchon répartiteur de tension comportant une enveloppe tubulaire en matière isolante et une série d'organes déflecteurs conducteurs noyés dans la matière isolante, les organes déflecteurs ayant une forme en trompette coaxiale à l'enveloppe en matière isolante et ayant une extrémité de petit diamètre débouchant dans un canal central du manchon répartiteur de tension.

Par leur forme particulière, les organes déflecteurs assurent une déformation des surfaces équipotentielles tendant à une diminution des contraintes électriques au sein de la matière isolante. Toutefois, les organes déflecteurs n'ont aucune influence sur la répartition globale des surfaces équipotentielles de sorte que pour obtenir une répartition satisfaisante, il est nécessaire de multiplier les organes déflecteurs et il en résulte un encombrement important du manchon répartiteur de tension.

Afin de diminuer les dimensions du manchon répartiteur, il est connu du document FR-A-2.656.962 de réaliser un manchon répartiteur de tension comportant un déflecteur de faible encombrement disposé pour venir en contact avec l'écran de câble et former une surépaisseur par rapport à celui-ci, cet organe déflecteur étant associe à un matériau à haute permittivité disposé autour de l'organe déflecteur et s'étendant le long de l'axe longitudinal du manchon répartiteur, la surface externe du matériau à haute permittivité étant formée de plusieurs tronc de cônes ayant des conicités variées de façon que l'épaisseur de matériau à haute permittivité aille en diminuant depuis le manchon déflecteur vers l'extrémité du manchon répartiteur. Toutefois, pour assurer une répartition régulière des surfaces équipotentielles il est nécessaire de prévoir une grande masse de matériau à haute permittivité, de sorte que l'encombrement du manchon répartiteur reste relativement important.

Un but de l'invention est de proposer un manchon répartiteur d'encombrement plus faible que les manchons répartiteurs existants et assurant néanmoins une répartition satisfaisante des surfaces équipotentielles.

Selon l'invention on propose un manchon répartiteur de tension comportant une enveloppe tubulaire en matière isolante ayant une surface interne délimitant un canal central du manchon répartiteur, au moins un organe déflecteur conducteur ou semi-conducteur noyé dans la matière isolante et ayant une forme générale conique coaxiale à l'enveloppe isolante et une extrémité de petit diamètre débouchant dans le canal central, et un bloc en matériau à haute permittivité associé à l'organe déflecteur, le bloc en matériau à haute permittivité ayant une surface interne débouchant dans le canal central, une surface externe de forme générale conique de conicité inverse de l'organe déflecteur et une embase en contact avec la surface interne de l'organe déflecteur correspondant.

Ainsi, l'effet d'écartement des surfaces équipotentielles procuré par le matériau à haute permittivité se combine avec la déformation de ces mêmes surfaces équipotentielles provoquée par les organes déflecteurs et on obtient ainsi un compromis permettant de réduire les dimensions des organes déflecteurs et la masse de matériau à haute permittivité tout en obtenant une forme et une répartition régulière des surfaces équipotentielles.

Selon une version avantageuse de l'invention, les organes déflecteurs comportent à une extrémité de grand diamètre un bourrelet torique ayant une section présentant un axe de symétrie parallèle au canal central. L'effet sur la forme des surfaces équipotentielles se trouve ainsi amélioré.

Selon un autre aspect avantageux de l'invention, l'organe déflecteur comporte un épaulement s'étendant en saillie vers l'extérieur perpendiculairement au canal central et rempli de matériau à haute permittivité. Ainsi, à son extrémité chevauchant le déflecteur, le matériau à haute permittivité a une épaisseur suffisante pour éviter l'apparition de contraintes électriques.

Selon encore une autre caractéristique avantageuse de l'invention, dans le cas d'un manchon répartiteur comportant plusieurs organes déflecteurs, le bloc de matériau à haute permittivité associé à un déflecteur s'étend jusqu'au voisinage d'un déflecteur adjacent. On évite ainsi les contraintes électriques qui pourraient apparaître si une couche de matériau à haute permittivité de faible épaisseur était mise en contact direct avec un organe déflecteur.

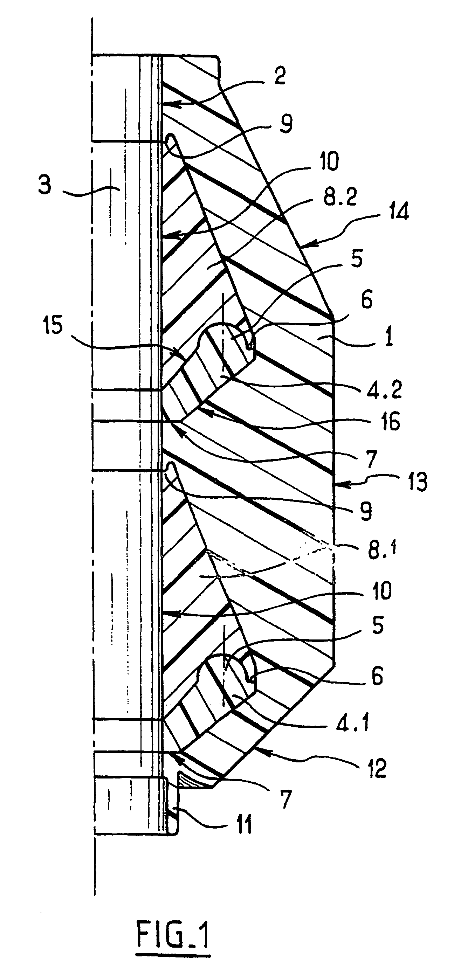

Les caractéristiques et avantages de l'invention ressortiront encore à la lecture de la description qui va suivre d'un mode particulier non limitatif de l'invention, en relation avec la figure unique ci-jointe qui est une demi-vue en coupe axiale d'un manchon répartiteur de tension selon l'invention.

En référence à la figure, le manchon répartiteur de tension selon l'invention comporte une enveloppe tubulaire isolante 1 ayant une surface interne 2 délimitant un canal central 3 du manchon répartiteur.

Dans le mode de réalisation illustré, deux organes déflecteurs, portant la référence numérique générale 4 et les références numériques particulières 4.1 et 4.2, ayant une forme généralement conique sont noyés dans l'enveloppe en matière isolante coaxialement à celle-ci et débouchent dans le canal central à leur extrémité de petit diamètre. Dans le mode de réalisation préféré illustré, chaque organe déflecteur 4 comporte à son extrémité de grand diamètre un bourrelet torique 5 ayant une section présentant un axe de symétrie parallèle au canal central, ici une section en demi-cercle dont le bord interne se raccorde directement à la surface interne 15 de l'organe déflecteur 4 tandis que le bord externe du bourrelet se raccorde à la surface externe 16 de l'organe déflecteur 4 par l'intermédiaire d'un épaulement 6 qui s'étend en saillie vers l'extérieur perpendiculairement au canal central.

A leur extrémité de petit diamètre, les organes déflecteurs 4 comportent une surface terminale 7 perpendiculaire au canal central. Ainsi, on évite les contraintes électriques qui apparaissent généralement après mise en place du manchon répartiteur sur un câble et mise sous tension de celui-ci lorsque la surface externe du déflecteur débouche dans le canal central selon une forme en sifflet.

Un bloc en matériau à haute permittivité est associé à chaque organe déflecteur 4. Les blocs en matériau à haute permittivité portent la référence numérique générale 8 et la référence numérique particulière 8.1 pour le bloc en matériau à haute permittivité associé au déflecteur 4.1 et 8.2 pour le bloc en matériau à haute permittivité associé au déflecteur 4.2. Le matériau à haute permittivité 8 a une surface interne cylindrique 10 débouchant dans le canal central 3 et formant une paroi continue avec la surface interne de l'enveloppe isolante, et la partie de surface interne des déflecteurs 4 débouchant dans le canal central 3. Chaque bloc en matériau à haute permittivité a une surface externe de forme générale conique ayant une conicité inverse de celle de l'organe déflecteur auquel il est associé, et une embase en contact avec la surface interne 15 de l'organe déflecteur 4 correspondant. Dans le mode de réalisation préféré illustré, le matériau à haute permittivité 8 remplit non seulement l'intérieur de l'organe déflecteur 4 correspondant, mais recouvre également le bourrelet 5 et remplit l'épaulement 6 en saillie vers l'extérieur. Ainsi, à l'interface entre la matière conductrice d'un organe déflecteur, la matière isolante de l'enveloppe et le matériau à haute permittivité, ce dernier a une épaisseur suffisante pour éviter l'apparition de contraintes électriques à cette interface.

De même, à son extrémité de petit diamètre, le matériau à haute permittivité comporte un épaulement 9 adjacent à la surface interne 10 du bloc en matériau à haute permittivité et s'étendant perpendiculairement au canal central 3. L'épaulement 9 est rempli par la matière isolante de l'enveloppe 1. Cet épaulement rempli de matière isolante évite l'apparition de contraintes électriques à l'intersection du matériau à haute permittivité et de la matière isolante avec le canal central lorsque le manchon répartiteur de tension est en place sur un câble électrique sous tension. Pour obtenir l'effet recherché, il suffit que les épaulements 6 et 9 aient une largeur de quelques millimètres.

Toujours dans le but de minimiser les contraintes électriques, l'extrémité de petit diamètre du bloc en matériau à haute permittivité 8.1 ne s'étend pas jusqu'à l'organe déflecteur 4.2 mais s'arrête au voisinage de celui-ci.

Dans le mode de réalisation préféré illustré, l'enveloppe isolante comporte à son extrémité servant à l'introduction d'un câble une jupe 11 s'étendant parallèlement au canal central et destinée à recouvrir l'extrémité de l'écran de câble lors de la mise en place du manchon répartiteur de tension sur une extrémité de câble. De préférence comme illustré sur la figure, l'enveloppe en matière isolante a une surface externe comportant une partie conique 12 sensiblement parallèle à la surface externe de l'organe déflecteur 4.1 en regard de celui-ci, une partie sensiblement cylindrique 13 en regard de l'intervalle entre les deux organes déflecteurs, et une partie conique 14 sensiblement parallèle à la surface externe du bloc en matériau à haute permittivité 8.2 en regard de celui-ci.

L'enveloppe isolante, les organes déflecteurs et les blocs en matériau à haute permittivité sont de préférence réalisés en caoutchouc au silicone convenablement chargé pour lui conférer les propriétés électriques correspondantes.

Bien entendu l'invention n'est pas limitée au mode de réalisation décrit et on peut y apporter des variantes de réalisation sans sortir du cadre de l'invention tel que défini par les revendications.

En particulier, bien que dans le mode de réalisation illustré la surface externe du matériau à haute permittivité apparaisse comme étant strictement conique, c'est-à-dire engendrée par une génératrice rectiligne, la surface externe du matériau à haute permittivité peut être délimitée par une surface engendrée par une génératrice curviligne ayant de préférence une concavité tournée vers l'extérieur.

De même, bien que dans le mode de réalisation illustré, la surface externe des blocs en matériau à haute permittivité apparaisse sensiblement perpendiculaire à la surface externe des organes déflecteurs, la conicité relative des organes déflecteurs et des blocs en matériau à haute permittivité associés pourra être variée en fonction du nombre d'organes déflecteurs et de la répartition des surfaces équipotentielles recherchée dans chaque cas particulier.

Bien que le manchon répartiteur selon l'invention ait été illustré avec une surface externe lisse, on peut réaliser celui-ci avec une surface externe comportant des jupes en saillie en particulier lorsque le manchon répartiteur est destiné à être monté sur une extrémité de câble soumise aux intempéries.

## Revendications

1. Manchon répartiteur de tension pour un câble électrique haute tension comportant une enveloppe tubulaire (1) en matière isolante ayant une surface interne (2) délimitant un canal central (3) du manchon répartiteur, et au moins un organe déflecteur (4) conducteur ou semi-conducteur noyé dans la matière isolante et ayant une forme générale conique coaxiale à l'enveloppe en matière isolante et une extrémité de petit diamètre débouchant dans le canal central (3), **caractérisé en ce que** l'organe déflecteur (4) est associé à un bloc (8) en matériau à haute permittivité ayant une surface interne débouchant dans le canal central, une surface externe de forme générale conique de conicité inverse de l'organe déflecteur (4) et une embase en contact avec une surface interne (15) de l'organe déflecteur (8) correspondant.

2. Manchon répartiteur selon la revendication 1, **caractérisé en ce qu'**à une extrémité de grand diamètre, l'organe déflecteur (4) comporte un bourrelet torique (5) ayant une section présentant un axe de symétrie parallèle au canal central.

3. Manchon répartiteur selon la revendication 2, **caractérisé en ce que** le bourrelet (5) a une section en demi-cercle.

4. Manchon répartiteur selon la revendication 1, **caractérisé en ce que** l'organe déflecteur comporte un épaulement (6) s'étendant en saillie vers l'extérieur perpendiculairement au canal central et rempli de matériau à haute permittivité.

5. Manchon répartiteur selon la revendication 1, **caractérisé en ce qu'**il comporte plusieurs organes déflecteurs (4.1, 4.2) et **en ce que** le bloc en matériau à haute permittivité (8.1) associé à un organe déflecteur (4.1) s'étend jusqu'au voisinage d'un organe déflecteur (4.2) adjacent.

6. Manchon répartiteur selon la revendication 1,
**caractérisé en ce qu'**à une extrémité de petit diamètre le bloc en matériau à haute permittivité comporte un épaulement (9) rempli par la matière isolante de l'enveloppe.

7. Manchon répartiteur selon la revendication 1, **caractérisé en ce qu'**à son extrémité de petit diamètre l'organe déflecteur (4) comporte une surface terminale (7) perpendiculaire au canal central.

8. Manchon répartiteur selon la revendication 1, **caractérisé en ce que** l'enveloppe en matière isolante (1) comporte une partie terminale (14) ayant une surface externe sensiblement parallèle à la surface externe du matériau à haute permittivité (8.2) en regard.

9. Manchon répartiteur selon la revendication 1, **caractérisé en ce qu'**à une extrémité d'introduction l'enveloppe isolante comporte une jupe (11) s'étendant parallèlement au canal central.

## Patentansprüche

1. Spannungsverteilermuffe für ein elektrisches Hochspannungskabel, umfassend eine rohrförmige Umhüllung (1) aus isolierendem Material, deren Innenfläche (2) einen zentralen Kanal (3) der Verteilermuffe begrenzt, und zumindest ein leitfähiges oder halbleitendes Ablenkelement (4), das in das isolierende Material eingebettet ist, im wesentlichen konisch und koaxial mit der Umhüllung aus isolierendem Material geformt ist und ein Ende mit kleinem Durchmesser hat, das in den zentralen Kanal (3) mündet, **dadurch gekennzeichnet, dass** das Ablenkelement (4) mit einem Block (8) aus einem Material hoher Dielektrizitätskonstante verbunden ist, umfassend eine Innenfläche, die in den zentralen Kanal mündet, eine Außenfläche, die im wesentlichen konisch mit gegenüber dem Ablenkelement (4) umgekehrter Konizität geformt ist und eine Basis, die mit einer Innenfäche (15) des entsprechenden Ablenkelements (8) in Kontakt ist.

2. Verteilermuffe nach Anspruch 1, **dadurch gekennzeichnet, dass** das Ablenkelement (4) an einem Ende mit großem Durchmesser einen torischen Wulst (5) hat, dessen Querschnitt eine parallel zum zentralen Kanal verlaufende Symmetrieachse aufweist.

3. Verteilermuffe nach Anspruch 2, **dadurch gekennzeichnet, dass** der Wulst (5) einen halbkreisförmigen Querschnitt hat.

4. Verteilermuffe nach Anspruch 1, **dadurch gekennzeichnet, dass** das Ablenkelement eine Schulter (6) umfasst, die senkrecht zum zentralen Kanal nach außen absteht und mit einem Material hoher Dielektrizitätskonstante angefüllt ist.

5. Verteilermuffe nach Anspruch 1, **dadurch gekennzeichnet, dass** sie mehrere Ablenkelemente (4.1, 4.2) umfasst und sich der mit einem Ablenkelement (4.1) verbundene Block aus einem Material (8.1) hoher Dielektrizitätskonstante bis in die Nähe eines angrenzenden Ablenkelements (4.2) erstreckt.

6. Verteilermuffe nach Anspruch 1, **dadurch gekennzeichnet, dass** der Block aus einem Material hoher Dielektrizitätskonstante an einem Ende mit kleinem Durchmesser eine Schulter (9) hat, die mit dem isolierenden Material der Umhüllung angefüllt ist.

7. Verteilermuffe nach Anspruch 1, **dadurch gekennzeichnet, dass** das Ablenkelement (4) an einem Ende mit kleinem Durchmesser eine senkrecht zum zentralen Kanal verlaufende Endfläche (7) hat.

8. Verteilerhülse Anspruch 1, **dadurch gekennzeichnet, dass** die Umhüllung (1) aus isolierendem Material einen Endabschnitt (14) hat, dessen Außenfläche im wesentlichen parallel zur Außenfläche des gegenüberliegenden Materials (8.2) hoher Dielektrizitätskonstante verläuft.

9. Verteilerhülse nach Anspruch 1, **dadurch gekennzeichnet, dass** die Umhüllung an einem Einführende einen parallel zum zentralen Kanal verlaufende Schirm (11) umfasst.

## Claims

1. A voltage distributor sleeve for a high-voltage electricity cable, said distributor sleeve comprising a tubular jacket (1) made of an insulating material and having an inside surface (2) defining a central channel (3) of the distributor sleeve, and at least one deflector member (4) that is conductive or semiconductive, that is embedded in the insulating material, that is substantially conical in shape and coaxial to the jacket made of insulating material, and that has a small-diameter end opening out into the central channel (3), said distributor sleeve being **characterized in that** the deflector member (4) is associated with a block (8) of high-permittivity material that has an inside surface opening out into the central channel, an outside surface that is substantially conical in shape and of cone angle that is the reverse of the cone angle of the deflector member (4), and a base in contact with an inside surface (15) of the corresponding deflector member (8).

2. A distributor sleeve according to claim 1, **characterized in that**, at a large-diameter end, the deflector member (4) has a toroidal bead (5) that has a cross-section which has an axis of symmetry parallel to the central channel.

3. A distributor sleeve according to claim 2, **characterized in that** the bead (5) has a semi-circular cross-section.

4. A distributor sleeve according to claim 1, **characterized in that** the deflector member has a shoulder (6) projecting outwards perpendicularly to the central channel and filled with high-permittivity material.

5. A distributor sleeve according to claim 1, **characterized in that** it has a plurality of deflectors (4.1, 4.2) and **in that** the block of a high-permittivity material (8.1) associated with a deflector member (4.1) extends to the vicinity of an adjacent deflector member (4.2).

6. A distributor sleeve according to claim 1, **characterized in that**, at a small-diameter end, the block of high-permittivity material is provided with a shoulder (9) filled with insulating material of the jacket.

7. A distributor sleeve according to claim 1, **characterized in that**, at its small-diameter end, the deflector member (4) is provided with an end surface (7) that is perpendicular to the central channel.

8. A distributor sleeve according to claim 1, **characterized in that** the jacket made of an insulating material (1) includes an end portion (14) that has an outside surface substantially parallel to the facing outside surface of the high-permittivity material (8.2).

9. A distributor sleeve according to claim 1, **characterized in that**, at an insertion end, the insulating jacket has a skirt (11) extending parallel to the central channel.
